# EUROPÄISCHE PATENTSCHRIFT

(11) **EP 1 449 081 B1**
(45) Veröffentlichungstag und Bekanntmachung des Hinweises auf die Patenterteilung: **17.01.2007**
(21) Anmeldenummer: 02785375.3
(22) Anmeldetag: 08.11.2002
(51) Int. Cl.: G06F 9/50

(54) **VERFAHREN UND VORRICHTUNG ZUR VERTEILTEN VERARBEITUNG GROSSER DATENMENGEN**
METHOD AND DEVICE FOR PROCESSING DATA
PROCEDE ET DISPOSITIF DE TRAITEMENT DE DONNEES

(30) Priorität: 15.11.2001 DE 10156036
(43) Veröffentlichungstag der Anmeldung: 25.08.2004
(73) Patentinhaber: Evotec AG, 22525 Hamburg (DE)
(72) Erfinder: SCHMIDT, Regina, 20251 Hamburg (DE); PETERS, Hauke, 24783 Osterrönfeld (DE)
(74) Vertreter: von Kirschbaum, Alexander
(86) Internationale Anmeldenummer: PCT/EP2002/012488
(87) Internationale Veröffentlichungsnummer: WO 2003/042820

(56) Entgegenhaltungen:
- WO-A-00/65441
- WO-A-93/18464
- US-A- 5 606 493
- INMAN J T ET AL: "A HIGH-THROUGHPUT DISTRIBUTED DNA SEQUENCE ANALYSIS AND DATABASE SYSTEM" IBM SYSTEMS JOURNAL, IBM CORP. ARMONK, NEW YORK, US, Bd. 40, Nr. 2, 2001, Seiten 464-486, XP001116346 ISSN: 0018-8670

## Beschreibung

Die Erfindung betrifft ein Verfahren und eine Vorrichtung zur Datenverarbeitung, insbesondere Bilddatenverarbeitung, wobei beispielsweise eine große Menge von Bilddaten in kurzer Zeit gehandhabt werden muss. Eine derartige Bilddatenverarbeitung ist beispielsweise bei Screeningprozessen von z.B. biologischen und/oder chemischen Proben erforderlich, insbesondere im Hochdurchsatz- und Medium-Screening.

Hochauflösende Bilder, insbesondere digital aufgenommene hochauflösende Bilder weisen eine große Bilddatenmenge auf. Beispielsweise bei der konfokalen Mikroskopie weisen bereits Bilder mit mittlerer Auflösung typischerweise eine Größe von 5 bis 10 MByte auf. In modernen Hochdurchsatz-Screeninganlagen wird eine Vielzahl von chemischen und/oder biologischen Proben in kurzer Zeit untersucht. Hierbei wird von jeder Probe zumindestens ein Bild erzeugt. Üblicherweise werden beim Hochdurchsatz-Screening Titerplatten eingesetzt, die beispielsweise 1536 Vertiefungen (Wells) aufweisen, wobei in jedem Well eine Probe angeordnet ist. In modernen Hochdurchsatz-Screeninganlagen werden pro Tag bis zu 50 oder mehr Titerplatten gescannt. Die täglich auftretende Datenmenge beläuft sich somit auf etwa 400 bis 1000 GByte. Neben der Aufnahme von Bilddaten erfolgt bei anderen Untersuchungsverfahren, wie beispielsweise der Fluoreszenz-Spektroskopie das Erfassen einer Vielzahl von Mess- oder Analysedaten. Zusätzlich zu dem Problem des hohen Speicheraufwandes für derartige Daten besteht insbesondere beim Hochdurchsatz-Screening das Problem, dass die Untersuchungsverfahren äußerst komplex sind und daher große Rechenleistungen erforderlich sind. Bei dem vorstehend beschriebenen Beispiel würde das Durchführen üblicher Untersuchungsverfahren, auch mit einem schnellen Rechner, an den an einem Tag aufgenommenen Daten ca. 1 Woche beanspruchen. Derart lange Auswertezeiten führen bei ausgelasteten Hochdurchsatz-Screeninganlagen, die ununterbrochen in Betrieb sind, zu einem erheblichen Hardwareaufwand, um die entsprechende Datenmenge verarbeiten zu können. Ferner ist der zeitliche Abstand zwischen dem Durchführen der Untersuchung und dem Erhalt des Auswerteergebnisses insbesondere für moderne Dienstleistungsunternehmen zu groß.

Aus einem Artikel des IBM Systems Journal, New York, US 2001, 40 (2), Seiten 464 - 486 ist ein Datenbanksystem bekannt, bei dem von einer Datenbank Arbeitsanfragen, organisiert in Anfrageschlangen an eine festgelegte Anzahl von Server zur Bearbeitung weitergeleitet werden. Hierzu wird vor Prozeßbeginn eine Serverliste initialisiert. Zur Bearbeitung von Arbeitsanfragen wird bei den zur Verfügung stehenden Servern direkt angefragt, ob diese zur Verfügung stehen und den entsprechenden Auftrag ausführen können. Die Abarbeitung der Arbeitsanfragen erfolgt nach dem FIFO-Prinzip.

Aufgabe der Erfindung ist es, ein Verfahren zur Datenverarbeitung zu schaffen, mit dem eine große Menge an Daten, insbesondere Bilddaten, in kurzer Zeit mit hoher Betriebssicherheit verarbeitet bzw. ausgewertet werden kann. Ferner ist es Aufgabe der Erfindung, eine Vorrichtung zur Durchführung des Verfahrens zu schaffen.

Die Lösung dieser Aufgabe erfolgt erfindungsgemäß durch die Merkmale des Anspruchs 1 bzw. 20.

Bei dem erfindungsgemäßen Verfahren werden Daten, insbesondere Bilddaten, mittels einer Aufnahmeeinrichtung, wie beispielsweise einer CCD-Kamera er zeugt. Bei einem ersten Schritt werden die Daten an eine Datcn-Verteileinrichtung, bei der es sich beispielsweise um einen Rechner handelt, übermittelt. Ein wesentlicher Aspekt der Erfindung besteht darin, dass die Daten, die in zeitlich kurzen Abständen an die Daten-Verleileinrichtung übermittelt werden, auf mehreren Daten-Auswerteeinrichtungen parallel verarbeitet, bzw. ausgewertet werden. Der übliche Zeitabstand zwischen zwei aufeinanderfolgenden Datensätzen beträgt hierbei beispielsweise 0,6-1,2 s. Durch die parallelisierte Auswertung der Daten ist deren Auswertung erheblich schneller möglich. Es ist bei einer entsprechend hohen Parallelisierung möglich, die von einer Hochdurchsatz-Screeninganlage erzeugten Bilder oder Daten bzw. Datensätze quasi zeitgleich auszuwerten. Es ist ferner bei dem erfindungsgemäßen Verfahren möglich, einer Hochdurchsatz-Screcninganlage eine Auswerteeinheit mit mehreren parallel arbeitenden Datcn-Auswerteeinrichtungen mit einzelnen relativ geringen Rechenleistungen zuzuordnen. Hierdurch sind die Kosten für die Daten-Auswertung erheblich verringert.

Zur effektiven Ausnutzung der Daten-Auswerteeinrichtung werden die Daten, bei denen es sich z.B. um Bilddaten handelt, in der Daten-verteileinrichtung entsprechend vorbereitet und gezielt übermittelt. Erfindungsgemäß wird den auszuwertenden Daten in der Daten-Verteileinrichtung zunächst eine geeignete Daten-Auswerteeinrichtung zugeordnet. Hierbei werden vorzugsweise bekannte Eignungsparameter der einzelnen Daten-Auswerteeinrichtungen, die sich voneinander unterscheiden können, mit den Anforderungen für die Auswertung der Daten verglichen, so dass eine optimale Zuordnung der auszuwertenden Daten zu einer Daten-Auswerteeinrichtung erfolgen kann. Beispielsweise handelt es sich bei den Eignungsparametern um die Verarbeitungskapazität und/oder die Verarbeitungsgeschwindigkeit und/oder die Art der Software, die auf der Daten-Auswerteeinrichtung vorhanden ist und/oder die Verfügbarkeit der Daten-Auswerteeinrichtung. Der wichtigste Eignungsparameter ist hierbei die Auswerte-Software ggf. einschließlich Versionsbezeichnung. So kann beispielsweise auf mehreren Daten-Auswerteeinrichtungen unterschiedliche Software in unterschiedlichen Versionen vorhanden sein, durch die unterschiedliche Auswerteverfahren wie beispielsweise FCS, FIMDA, FILDA etc. oder Auswerteverfahren zur Auswertung von Bilddaten, wie Huff-Transformationen, durchgeführt werden können. Ein weiterer wichtiger Eignungsparameler ist die Verfügbarkeit. Hier wird überprüft, ob von der entsprechenden Daten-Auswerteeinrichtung zu einem gegebenen Zeitpunkt eine Berechnung durchgeführt wird, oder ob die Daten-Auswerteeinrichtung verfügbar ist. Durch diese Zuordnung der auszuwertenden Daten zu einer geeigneten Daten-Auswerteeinrichtung ist der Verarbeitungsprozess der Daten weiter verbessert und beispielsweise die Zeitspanne zwischen der Datenaufnahme und dem Vorliegen des Auswerteergebnisses weiter verringert.

Ein weiterer wesentlicher Aspekt des erfindungsgemäßen Verfahrens besteht darin, dass die Daten für die Übermittlung von der Daten-Verteileinrichlung zu der Daten-Auswerteeinrichtung in einen standardisierten Datencontainer überführt werden. Die Container sind hierbei unabhängig von den tatsächlich in ihnen enthaltenen Daten identisch. Dies hat den Vorteil, dass zur Übermittlung der Datencontainer standardisierte Protokolle verwendet werden können. Hierdurch ist die Betriebssicherheit der Anlage verbessert. Ferner kann hierdurch eine schnellere Übermittlung erfolgen.

Anschließend erfolgt gemäß des erfindungsgemäßen Verfahrens die Übermittlung des standardisierten Datcncontainers an die geeignete Daten-Auswerteeinrichtung.

Erfindungsgemäß ist ein Agent vorgesehen. Der Agent dient zur Verwaltung der einzelnen Daten-Auswerteeinrichtungen. In einer daten-auswerteeinrichtungs-spezifischen Datei des Agenten sind die Eignungsparameter der Datcn-Auswerteeinrichtung gespeichert. Insbesondere ist jeder Daten-Auswerteeinrichtung ein eigener Agent zugeordnet, der vorzugsweise ein Bestandteil der Daten-Verteileinrichtung ist. Aufgrund des Vorsehens eines Agenten ist es möglich, dass die Daten-Verteileinrichtung nur mit den entsprechenden Agenten der einzelnen Daten-Auswerteeinrichtungen und nicht mit den Daten-Auswerteeinrichtungen selbst kommunizieren muss. Die Kommunikation mit den Daten-Auswerteeinrichtungen erfolgt ausschließlich über die Agenten. Vorzugsweise werden von den Agenten insbesondere in einer Startphase die Eignungsparameter der einzelnen Daten-Auswerteeinrichtungen abgefragt. Somit sind beispielsweise zu einem Startzeitpunkt eines Hochdurchsatz-Screening-Verfahrens die Eignungsparameter der einzelnen Daten-Auswerteeinrichtungen bereits bekannt. Die Daten-Verteileinrichtung kann somit sehr schnell auf diese Daten zugreifen. Dies hat den Vorteil, dass die geeignete Daten-Auswerteeinrichtung von der Daten-Verteileinrichtung in kurzer Zeit ausgewählt werden kann. Vorzugsweise werden die Eignungsparameter von den Agenten in regelmäßigen Abständen abgefragt oder von den Daten-Auswerteeinrichtungen in regelmäßigen Abständen an die Agenten übermittelt.

Bei der Erfindung sind sowohl auf der Seite der Daten-Verteileinrichtung als auch auf der Seite der einzelnen Daten-Auswerteeinrichtungen jeweils Agenten vorgesehen. Handelt es sich bei den Daten-Auswerteeinrichtungen beispielsweise um einzelne Rechner, so weist jeder dieser Rechner einen Agenten auf. Zu diesen Agenten besteht jeweils ein entsprechender Agent auf der Seite der Daten-Verteileinrichtung. Es bestehen in dieser Ausführungsform somit immer Paare von zwei Agenten, die miteinander kommunizieren und jeweils einer Daten-Auswerteeinrichtung zugeordnet sind. Hierdurch ist der Datenaustausch zwischen der Daten-Verteileinrichtung und der Daten-Auswerteeinrichtung erheblich vereinfacht. Insbesondere ist es möglich, dass unterschiedliche Agentenpaare über unterschiedliche Netzwerkprotokolle kommunizieren. Es ist nur erforderlich, dass ein Paar Agenten mit demselben Netzwerkprotokoll kommuniziert. Dies hat den Vorteil, dass die gesamte Anlage auf einfache Weise durch weitere Daten-Auswerteeinrichtungen ergänzt und auch auf andere Weise erweitert werden kann. Dies erhöht die Flexibilität.

Da es sich bei den Daten-Auswerteeinrichtungen vorzugsweise um gesonderte Rechner handelt, erfolgt die Datenübertragung zwischen der Daten-Verteileinrichtung und den Daten-Auswerteeinrichtungen mit Hilfe von Datcn-Fernübertragungscinrichtungen wie Kabeln u.dgl.

Vorzugsweise wird in der Daten-Aufnahmeeinrichtung den Daten jeweils ein Auswerteauftrag zugeordnet. Bei dem Auswerteauftrag handelt es sich beispielsweise um die Art des Analyscverfahrens, das von der Daten-Auswerteeinrichtung durchgeführt werden soll. Entsprechende Auswerteaufträge können beispielsweise von einem externen Rechner an die Aufnahmccinrichtung in Abhängigkeit des aktuellen Aufnahmeprozesses, insbesondere Screeningprozesses, übermittelt werden. Vorzugsweise wird der Auswerteauftrag zusammen mit den Daten in dem Datencontainer überführt, so dass wiederum ein standardisierter Datencontainer, der die Daten und den Auswerteauftrag enthält, übermittelt wird. Das Verknüpfen eines Auswerteauftrages mit den Daten unmittelbar in der Daten-Aufnahmceinrichtung und/oder der Daten-Verteileinrichtung hat den Vorteil, dass die Auswerteaufträge nicht direkt zu den einzelnen Daten-Auswerteeinrichtungen übermittelt werden müssen. Es sind somit beispielsweise keine zusätzlichen Verbindungen, die von einem externen Rechner zu den einzelnen Daten-Auswerteeinrichtungen führen, nötig. Ferner ist sichergestellt, dass zwischen den Daten-Auswertecinrichtungen und der Daten-Verteileinrichtung weiterhin nur standardisierte Datencontainer übermittelt werden, so dass ein hoher Standard in Bezug auf die Betriebssicherheit aufrecht erhalten werden kann.

Die von der Aufnahmeeinrichtung generierten Daten können vor der Auswertung auch in einer Datenbank zwischengespeichert werden. Dies ist beispielsweise auch zur späteren Durchführung unterschiedlicher Auswerteverfahren mit denselben Daten vorteilhaft.

Vorzugsweise erfolgt nach Ausführung eines Auswerteauftrags von einer Daten-Auswerteeinrichtung eine Rückmeldung an die zugehörigen Agenten und/oder die Daten-Verteileinrichtung. Den Agenten und/oder der Daten-Verteileinrichtung ist somit stets der Zustand der einzelnen Daten-Auswerteeinrichtungen bekannt. Wie vorstehend beschrieben, handelt es sich bei der Verfügbarkeit der einzelnen Daten-Auswertceinrichtungen um einen Eignungsparamcter.

Erfolgt die Rückmeldung nicht innerhalb einer vorgegebenen Zeitspanne, die ggf. von der Art des Auswerteauftrages abhängig sein kann, so wird der Auswerteauftrag hinsichtlich dieser Daten-Auswerteeinrichtung storniert und vorzugsweise an eine andere geeignete Daten-Auswerteeinrichtung übertragen. Hiermit ist sichergestellt, dass in einer Daten-Auswertecinrichtung auftretende Fehler nicht dazu führen, dass von einzelnen Datensätzen bzw. Bildern keine Auswertung erfolgt. In einer weiteren bevorzugten Ausführungsform wird nach dem Stornieren eines Auswerteauftrags eine Testroutine bei der entsprechenden Daten-Auswerteeinrichtung durchgeführt. Bei der Testroutine kann es sich beispielsweise um einen Software-Check handeln. Sofern hierdurch ein Reparieren der Daten-Auswerteeinrichtung nicht möglich ist, kann diese gegebenenfalls abgeschaltet und ein Warnsignal an den Benutzer ausgegeben werden. Auf diesem Weg wird die Betriebssicherheit des komplelten Auswertesystems erhöht. Ebenso kann nach einmaligem oder mehrmaligem Auftreten eines Fehlers die Verbindung zu der entsprechenden Daten-Auswerteeinrichtung unterbrochen werden.

Vorzugsweise werden die Auswertcergebnisse der einzelnen Auswerteaufträge nach dem Bearbeiten durch die einzelnen Daten-Auswcrteeinrichtungen direkt an eine Weiterverarbeitungseinrichtung übermittelt. Hierbei kann es sich beispielsweise um eine Datenbank handeln. Ebenso ist ein Übermitteln der Auswerteergebnissc zurück an die Daten-Vertcileinrichtung möglich. Bei dieser Rückübermittlung kann wiederum die bevorzugte Struktur der Agenten und der Datencontainer wie vorstehend beschrieben, genutzt werden. Auch von der Daten-Verteileinrichtung aus kann die Übermittlung an eine Weiterverarbeitungseinrichtung erfolgen.

Es ist ferner möglich, mehrere Daten-Verteileinrichtungen mit den Daten-Auswerteeinrichtungen zu verbinden. Somit können mehrere Aufnahmeeinrichtungen, die beispielsweise jeweils einzeln mit einer Daten-Verteileinrichtung verbunden sind, von einer Vielzahl Daten-Verteileinrichtungen bedient werden. Dies senkt die Kosten je Auswerteauftrag und erhöht die Auswertegeschwindigkeit.

Bei einer besonders bevorzugten Ausführungsform weist die Daten-Verteileinrichtung und/oder jeder eine Auswerteeinrichtung enthaltende Rechner einen Manager auf. Der Manager dient zur Organisation der einzelnen Agenten. Beispielsweise kann der Manager auch dazu benutzt werden, einzelne von der Aufnahmeeinrichtung empfangene Daten mit einem Auswerteauftrag zu verknüpfen.

Das erfindungsgemäße Verfahren zur Datenverarbeitung ist insbesondere zur Verarbeitung von Daten geeignet, die beim Screening von chemischen und/oder biologischen Proben erhalten werden. Bei derartigen Screening-Verfahren, wie beim Hochdurchsatz- oder Mediumscreening, wird eine große Anzahl an Daten generiert. Beispielsweise werden beim Hochdurchsatz-Screening einzelne Wells, d.h. Vertiefungen einer Titerplatte, nacheinander betrachtet. Die hierbei erzeugten Bilddaten müssen anschließend weiterverarbeitet werden. Ferner ist es möglich, dass durch ein Bild mehrere unterschiedliche Wells gleichzeitig erfasst werden. Die einzeln erfassten Wells können beispielsweise auch mit dem erfindungsgemäßen Datenverarbeitungsverfahren voneinander getrennt werden.

Zur Auswertung der Daten, insbesondere der Bilddaten, können insbesondere Maskensysteme verwendet werden. Hierbei handelt es sich beispielsweise um einen Vergleich des aufgenommenen Bildes mit standardisierten Bildern.

Ferner betrifft die Erfindung eine Vorrichtung, wie eine Datenverarbeitungsanlage zur Durchführung des erfindungsgemäßen Verfahrens. Die Datenverarbeitungsanlage weist eine Aufnahmeeinrichtung zum Erzeugen von Daten, insbesondere Bilddaten, auf. Ferner weist die Datenverarbeitungsanlage eine Daten-Verteileinrichtung zum Übermitteln der Daten an eine geeignete Daten-Auswerteeinrichtung auf. Bei den Daten-Auswerteeinrichtungen sowie wie bei der Daten-Verteileinrichtung kann es sich jeweils um gesonderte Rechner handeln.

Ferner betrifft die Erfindung ein Datenspeichermedium, wie eine CD-ROM, mit einem Computerprogramm zur Durchführung des erfindungsgemäßen Verfahrens.

Nachfolgend wird die Erfindung anhand bevorzugter Ausführungsformen unter Bezugnahme auf die anliegenden Zeichnungen näher erläutert.

Es zeigen:
- Fig. 1: ein schematisches Flussdiagramm einer bevorzugten Ausführungsform der Erfindung,
- Fig. 2: ein schematisches Flussdiagramm einer zweiten Ausführungsform der Erfindung, und
- Fig. 3: ein schematisches Flussdiagramm einer dritten Ausführungsform der Erfindung.

Eine Bildaufnahmeeinrichtung 10, wie beispielsweise eine mit einem Mikroskop verbundene CCD-Kamera, erzeugt Bilder einer biologischen und/oder chemischen Probe und verknüpft diese mit einem Auswerteauftrag. Der Auswerteauftrag umfasst beispielsweise das Verfahren, mit dem ein Bild oder andere Daten ausgewertet werden sollen. Die Daten, bei denen es sich beispielsweise um Bilddaten handelt, werden an eine Daten-Verteileinrichtung 12, bei der es sich beispielsweise um einen herkömmlichen Computer handelt, übermittelt. Die Daten-Verteileinrichtung 12 weist einen Manager 14 und mehrere Agenten 16 auf. Der Manager 14 der Daten-Verteileinrichtung 12 nimmt die von der Bildaufnahmeeinrichtung 10 erzeugten Bilddaten und die Auswerteaufträge entgegen. Anstatt des Verknüpfens der Auswerteaufträge mit den Bilddaten durch den Manager 14 kann diese Verknüpfung auch bereits in der Aufnahmeeinrichtung 10 erfolgen.

Der Manager 14 hat neben der Verwaltung der Agenten 16 ferner die Aufgabe die von der Bildaufnahmeeinrichtung 10 erhaltenen Daten, wie beispielsweise Bilddaten in Datencontainer zu verpacken. Bei dem Datencontainer handelt es sich um eine standardisierte Software o.dgl., so dass die Übermittlung der Daten immer in demselben identischen Datencontainer erfolgt. Unabhängig von dem Inhalt der Datencontainer ist somit die Anforderung zur Übermittlung der Daten identisch. Die einzelnen Container unterscheiden sich lediglich dadurch, dass der für die in dem Container enthaltenen Daten messspezifische Auswerteauftrag an den Container in der Form einer Laufkarte angeheftet ist. In einem Container können auch mehrere Auswerteaufträge enthalten sein.

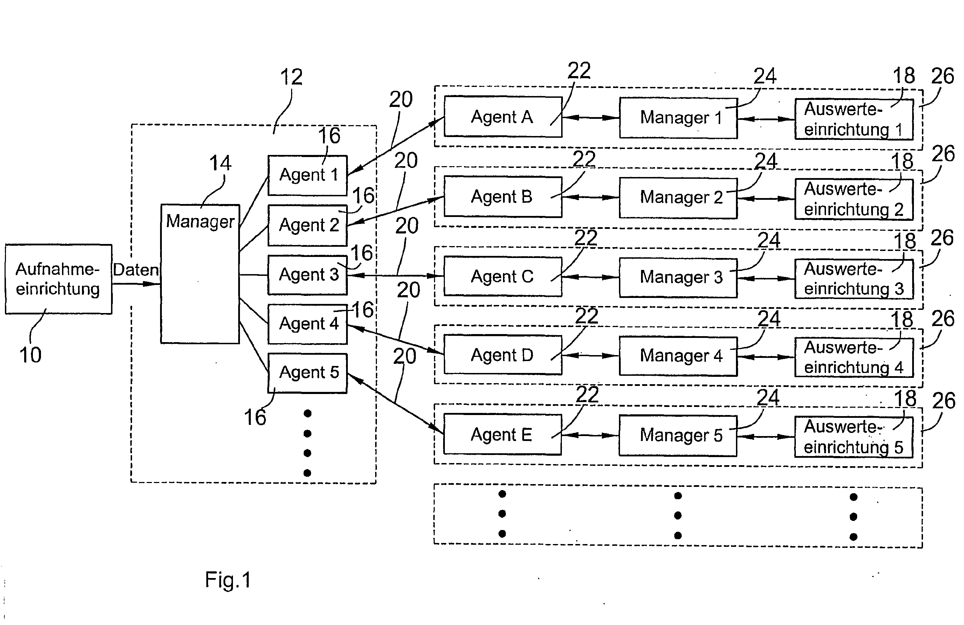

Die Daten-Verteileinrichtung weist mehrere Agenten 16 auf, die in Fig. 1 mit Agent 1, Agent 2 usw. bezeichnet sind. Jeder Agent 16 ist einer Auswerteeinrichtung 18 zugeordnet. In einer Startphase fragt jeder Agent 16 über eine Daten-Übertragungsleitung 20 sowie einen Agenten 22 und einen Manager 24 die Eignungsparameter der zugehörigen Auswerteeinrichtung 18 ab. Jedem Agent 16, d.h. den Agenten 1,2,3 usw. ist somit ein mit der zugehörigen Auswerteeinrichtung 18, d.h. der Auswerteeinrichtung 1,2,3 usw. verbundener Agent 22, d.h. die Agenten A,B,C usw. sowie ein Manager 24, d.h. die Manager 1,2,3 usw. zugeordnet. Die abgefragten Eignungsparameter, wie beispielsweise die Verfügbarkeit der Auswerteeinrichtung, die auf der Auswerteeinrichtung vorhandene Auswerte-Software etc. werden von dem Agenten 16 gespeichert.

Bilddaten, denen beispielsweise von der Bildaufnahmeeinrichtung 10 ein Auswerteauftrag zugeordnet wurde, müssen nunmehr von dem Manager 14 an eine der Auswerteeinrichtungen 18 übermittelt werden. Hierzu erfolgt zunächst eine Kommunikation zwischen dem Manager 14 und den der Daten-Verteileinrichtung 12 zugeordneten Agenten 16. Hierbei wird über unterschiedliche Verteilalgorithmen der geeignete Agent 16 bzw. die von dem entsprechenden Agenten vertretene Auswerteeinrichtung ausgewählt. Da die Auswahl der geeigneten Auswerteeinrichtung 18 innerhalb der Daten-Verteileinrichtung 12 durch Abfragen der Agenten 16 erfolgt, ist eine schnelle Auswahl der geeigneten Auswerteeinrichtungen möglich, wobei keine Datenabfrage über weitere Verbindungen u.dgl. erfolgen muss. Zur Auswahl der geeigneten Auswerteeinrichtung 18 kann der Manager 14 die Agenten 16, beispielsweise der Reihe nach abfragen und hierbei feststellen, ob die für den entsprechenden Auswerteauftrag erforderlichen Eignungsparameter gegeben sind. Ebenso ist es möglich, einzelnen Agenten 16 Prioritäten zuzuordnen, so dass die Abfrage anhand der Prioritäten erfolgt. Auch eine zufällige Auswahl der Abfragereihenfolge der Agenten 16 ist möglich.

Um zwischen der Daten-Verteileinrichtung 12 und den einzelnen Auswerteeinrichtungen 18, beispielsweise über unterschiedliche Netzwerkprotokolle kommunizieren zu können, ist den einzelnen Auswerteeinrichtungen 18 jeweils ein Agent 22 zugeordnet. Die Agenten 22, d.h. die Agenten A,B,C usw. kennen jeweils die Eignungsparameter und insbesondere den momentanen Zustand der zugehörigen Auswerteeinrichtungen 18, d.h. der Auswerteeinrichtungen 1,2,3 usw. Die Kommunikation zwischen der Daten-Verteilung 12 und den einzelnen Auswerteeinrichtungen 18 erfolgt somit ausschließlich zwischen den beiden Agenten 16,22 über die Datenleitungen 20.

Zusätzlich werden die von einem Agenten 16 an die zugehörige Auswerteeinrichtung 18 zu übermittelnden Bilddaten zusammen mit dem Auswerteauftrag für die Übermittlung in einen standardisierten Datencontainer überführt. Das Erzeugen der Datencontainer erfolgt durch den Manager 14. Die Standardisierung der Datencontainer ist hierbei derart, dass für die einzelnen Agenten 16 und 22 kein Unterschied zwischen den Datencontainern erkennbar ist. Unabhängig von den in dem Datencontainer enthaltenen Bilddaten sowie der mit diesen Bilddaten verknüpften Auswerteaufträge ist jeder Datencontainer für die Agenten 16,22 stets identisch. Somit kann auch die Übermittlung der Daten über die Datenfernübertragungsleitungen 20 standardisiert werden, da stets ein identischer Datencontainer übermittelt wird.

Die Übermittlung der Eignungsparameter durch die Agenten 22 an die Agenten 16 erfolgt vorzugsweise ebenfalls in Form von standardisierten Datenpaketen. Über die Daten-Fernübertragungseinrichtungen 20 werden somit ausschließlich standardisierte Datenpakete übermittelt.

Zur Auswertung der Bilddaten in einer Auswerteeinrichtung 18 ist jeder Auswerteeinrichtung 18 ein Manager 24 zugeordnet. Der Manager 24 dient zum "Auspacken" der Datencontainer. Durch den Manager 24 wird der standardisierte Datencontainer somit aufgehoben und derart für die Auswerteeinrichtung 18 vorbereitet, dass eine auftragsgemäße Auswertung der entsprechenden Bilddaten erfolgen kann. Der Manager 24 hat somit die Aufgabe, die ausgepackten Daten und den Auswerteauftrag an die Auswerteeinrichtung 18 weiterzuleiten. Wenn der Auswerteauftrag von der Auswerteeinrichtung 18 abgearbeitet wurde, hat der Manager 24 ferner die Aufgabe die bearbeiteten Daten wieder in den Datencontainer "einzupacken". Anschließend erfolgt von dem Manager 24 über den dazugehörigen Agenten 22 ein Weiterleiten der Datencontainer, die die bearbeiteten Daten enthalten, an den Agenten 16. Von dem Agenten 16 erfolgt gegebenenfalls über den Manager 14 ein Weiterleiten der Daten zu der Aufnahmeeinrichtung 10, in der sie gespeichert werden. Ebenfalls ist ein Weiterleiten der Daten zu einer anderen Datenbank möglich.

Die von den Auswerteeinrichtungen 18 ausgewerteten Bilddaten, d.h. die Auswerteergebnisse, können entweder an eine nicht dargestellte Datenbank übermittelt werden, oder über die vorhandenen Datenleitungen 20 an den Manager 14 zurück übermittelt werden. Bei der Zurückübermittlung an den Manager 14 erfolgt wiederum ein Erzeugen von Datencontainern durch die Manager 24, so dass die Übermittlung zwischen den Agenten 22,16 wiederum standardisiert ist.

Jeweils ein Agent 22, ein Manager 24 und eine Auswerteeinrichtung 18 sind als Rechner 26 ausgebildet. Die Verarbeitung der von der Bildaufnahmeeinrichtung 10 erfassten Bilder erfolgt somit parallelisiert durch mehrere Rechner 26.

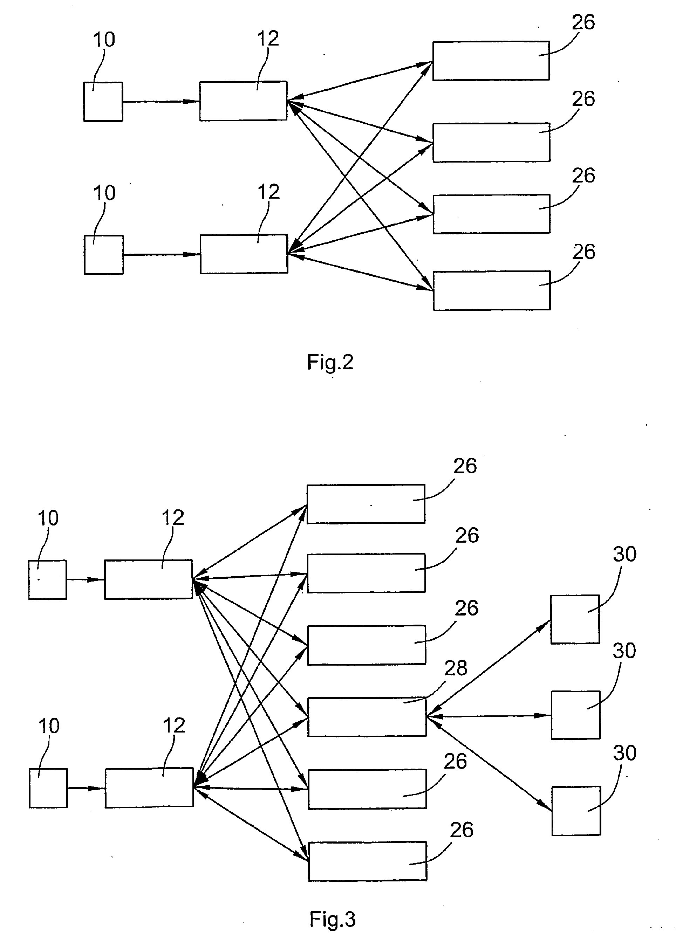

Bei dem in Fig. 2 dargestellten Ausführungsbeispiel werden die Rechner 26 von zwei Bildaufnahmeeinrichtungen 10 genutzt. Hierbei ist jeder Bildaufnahmeeinrichtung 10 eine Daten-Verteileinrichtung 12 zugeordnet, die sodann mit Hilfe der entsprechenden Agenten auf die unterschiedlichen Rechner 26 zugreift.

Bei dem in Fig. 3 dargestellten Ausführungsbeispiel handelt es sich um eine zweistufige Datenverarbeitung. Hierbei ist auf der Ebene der die Auswerteeinrichtungen umfassenden Rechner 26 ein Rechner 28 vorgesehen, der die Aufgaben einer Datenverteileinrichtung 12 übernimmt. Für die Daten-Verteileinrichtungen 12 handelt es sich bei dem Rechner 28 somit quasi um eine Auswerteeinrichtung mit hoher Verfügbarkeit. Für die Daten-Verteileinrichtungen 12 ist jedoch kein Unterschied zwischen den einzelnen Rechnern 26 und dem Rechner 28 zu erkennen. Es ist für die Daten-Verteileinrichtungen 12 unerheblich, ob es sich bei dem Rechner 28 beispielsweise um einen Hochleistungsrechner handelt, der beispielsweise die Bilddaten selbst auswertet oder ob der Rechner 28 die einzelnen Aufträge an weitere Rechner 30 weitergibt.

Selbstverständlich lässt sich diese Struktur auch um weitere Stufen erweitern.

## Patentansprüche

1. Verfahren zur Datenverarbeitung, insbesondere im Screening erhaltener Daten,mit den Schritten:
Erzeugen von Daten mittels einer Aufnahmeeinrichtung (10),
Übermitteln der Daten an eine Daten-Verteileinrichtung (12) zum Verteilen der Daten an mehrere Daten-Auswerteeinrichtungen (18), wobei die Daten auf den Daten-Auswerteeinrichtungen (18) verarbeitet werden, wobei jeder Daten-Auswerteeinrichtung (18) genau ein daten-verteileinrichtungs-seitiger und ein daten-auswerteeinrichtungs-seitiger Agent (16,22) zugeordnet ist,
wobei die Daten-Verteileinrichtung (12) einen Manager (14) zur Organisation der daten-verteileinrichtungs-seitigen Agenten (16) aufweist, und jeder Auswerteeinrichtung (18) ein Manager (24) zugeordnet ist,
regelmäßiges Abfragen von Eignungsparametern, einschließlich des Eignungsparameters der Art der Software, durch die daten-verteileinrichtungs-seitigen Agenten (16) bei den daten-auswerteeinrichtungs-seitigen Agenten (22),
Zuordnen der auszuwertenden Daten der Daten-Verteileinrichtung (12) zu der daten-verteileinrichtungs-seitigen Agenten (16) der geeigneten Daten-Auswerteeinrichtung (18),
Überführen der Daten für die Übermittlung in einen standardisierten Datencontainer, der die Daten und einen zugeordneten Auswerte auftrag enthält,
Übermitteln des standardisierten Datencontainers an die geeignete Daten-Auswerteeinrichtung (18), wobei Daten ausschließlich zwischen den beiden Agenten (16,22) ausgetauscht werden und ein Manager (24) zum Daten- und Auswerteauftrags austausch zwischen dem daten-auswerteeinrichtungs-seitigen Agenten (22) und der Daten-Auswerteeinrichtung (18) vorgesehen ist.

2. Verfahren nach Anspruch 1, bei welchem in der Aufnahmeeinrichtung (10) oder der Daten-Verteileinrichtung (12) den Daten ein Auswerteauftrag zugeordnet wird, und die Daten zusammen mit dem Auswerteauftrag in einem standardisierten Datencontainer an die Daten-Auswerteeinrichtung (18) übermittelt werden.

3. Verfahren nach Anspruch 1 oder 2, **dadurch gekennzeichnet, dass** zur Zuordnung der Daten zu einer geeigneten Auswerteeinrichtung (18) Eignungsparameter der Daten-Auswerteeinrichtung (18) abgefragt werden.

4. Verfahren nach Anspruch 3, **dadurch gekennzeichnet, dass** die Eignungsparameter in einer auswerteeinrichtungs-spezifischen Datei eines Agenten (16) gespeichert werden.

5. Verfahren nach Anspruch 4, **dadurch gekennzeichnet, dass** jeder Daten-Auswerteeinrichtung (18) ein eigener Agent (16) zugeordnet ist.

6. Verfahren nach Anspruch 4 oder 5, **dadurch gekennzeichnet, dass** die Agenten (16) Teil der Daten-Verteileinrichtung (12) sind.

7. Verfahren nach einem der Ansprüche 4-6, bei welchem durch die Agenten (16), insbesondere in einer Startphase, die Eignungsparameter von der Daten-Auswerteeinrichtung (18) abgefragt werden.

8. Verfahren nach einem der Ansprüche 1-7, bei welchem zwischen der Daten-Verteileinrichtung (12) und den Daten-Auswerteeinrichtungen (18) die Datencontainer über eine Daten-Femübertragungseinrichtung (20) übertragen werden.

9. Verfahren nach einem der Ansprüche 3-8, bei welchem als Eignungsparameter der Daten-Auswerteeinrichtung (18) die Art der zur Verfügung stehenden Software und/oder die Version der Software und/oder die Verfügbarkeit übermittelt werden.

10. Verfahren nach einem der Ansprüche 1-9, bei welchem die geeignete Daten-Auswerteeinrichtung(18) durch nacheinander Abfragen der jeweiligen Eignungsparameter ausgewählt wird.

11. Verfahren nach einem der Ansprüche 1-9, bei welchem die geeignete Daten-Auswerteeinrichtung (18) durch Abfragen der jeweiligen Eignungsparameter aufgrund einer vorbestimmten Prioritäten-Reihenfolge ausgewählt wird.

12. Verfahren nach einem der Ansprüche 1-11, bei welchem nach dem Ausführen des Auswerteauftrages von der Daten-Auswerteeinrichtung (18) eine Rückmeldung an die Daten-Verteileinrichtung (12) und/oder die Agenten (16) erfolgt.

13. Verfahren nach Anspruch 11, bei welchem von den Agenten (16) oder der Daten-Verteileinrichtung (12) nach Ablauf einer vorgegebenen Zeitspanne, in der keine Rückmeldung erfolgt ist, der Auswerteauftrag storniert und an eine andere geeignete Daten-Auswerteeinrichtung (18) übertragen wird.

14. Verfahren nach Anspruch 13, bei welchem nach dem Stornieren eine Testroutine in der Daten-Auswerteeinrichtung durchgeführt wird.

15. Verfahren nach einem der Ansprüche 1-14, bei welchem ein Auswerteergebnis eines Auswerteauftrags an eine Weiterbearbeitungseinrichtung, insbesondere eine Datenbank und/oder die Daten-Verteileinrichtung (12) übermittelt wird.

16. Verfahren nach einem der Ansprüche 1-15, bei welchem mehrere Aufnahmeeinrichtungen (10) und/oder mehrere Daten-Verteileinrichtungen (12) mit mehreren Daten-Auswerteeinrichtungen (18) verbunden sind.

17. Verfahren nach Anspruch 1, bei welchem der Manager (14) die von der Aufnahmeeinrichtung (10) erhaltenen Daten mit einem Datencontainer verbindet.

18. Verfahren nach einem der Ansprüche 1-17, bei welchem jeder Auswerteeinrichtung (18) ein Manager (24) zugeordnet ist, der die in einem Datencontainer enthaltenen Daten entnimmt und zusammen mit dem Auswerteauftrag an die Auswerteeinrichtung (18) weiterleitet.

19. Verfahren nach Anspruch 18, bei welchem der Manager (24) die von einer Auswerteeinrichtung (18) bearbeiteten Daten mit einem Datencontainer verbindet und diesen an den Manager (14) der Daten-Verteileinrichtung (12) weiterleitet.

20. Datenverarbeitungsanlage zur Durchführung des Verfahrens zur Datenverarbeitung nach einem der Ansprüche 1-19, mit
einer Aufnahmeeinrichtung (10) zum Erzeugen von Daten, und
einer Daten-Verteileinrichtung (12) zum Übermitteln der Daten an geeignete Daten-Auswerteeinrichtungen (18).

21. Datenspeichermedium, insbesondere CD-ROM, mit einem Computerprogramm zur Durchführung des Verfahrens nach einem der Ansprüche 1-19.

## Claims

1. Method for data processing, especially of data acquired by screening, comprising the following steps:
generating data by means of a recording means (10);
transmitting the data to a data distributing means (12) for distribution of the data to a plurality of data evaluating means (18), the data being processed on the data evaluating means (18), exactly one agent (16, 22) on the side of the data distributing means and one on the side of the data evaluating means being associated to each data evaluating means (18),
the data distributing means (12) comprising a manager (14) for organizing the agents (16) on the side of the data distributing means, and a manager (24) being associated to each evaluating means (18),
regularly sampling suitability parameters, including the suitability parameter of the type of the software, by the agents (16) on the side of the data distributing means at the agents (22) on the side of the data evaluating means,
associating the data of the data distributing means (12) to be evaluated to the agents (16) on the data distributing side of the suitable data evaluating means (18),
transferring the data into a standardized data container for transmission, said container including an associated evaluation order,
transmitting the standardized data container to the suitable data evaluating means (18), wherein data are exchanged exclusively between the two agents (16, 22) and a manger (24) is provided for exchanging data and evaluation orders between the agent (22) on the side of the data evaluating means and the data evaluating means (18).

2. Method of claim 1, wherein, in the recording means (10) or in the data distributing means (12), the data are associated to an evaluation order, and the data are transmitted to the data evaluating means (18) together with the evaluation order in a standardized data container.

3. Method of claim 1 or 2, wherein suitability parameters of the data evaluating means (18) are sampled for association of the data to a suitable evaluating means (18).

4. Method of claim 3, wherein the suitability parameters are stored in a file of an agent (16), the file being specific to an evaluating means.

5. Method of claim 4, wherein each data evaluating means (18) has its own agent (16) associated thereto.

6. Method of claim 4 or 5, wherein the agents (16) are part of the data distributing means (12).

7. Method of one of claims 4-6, wherein, especially during a starting period, the data evaluating means (18) samples the suitability parameters via the agents (16).

8. Method of one of claims 1-7, wherein the data containers are transmitted between the data distributing means (12) and the data evaluating means (18) via a data telecommunication means (20).

9. Method of one of claims 3-8, wherein the type of the software available and/or the version of the software and/or the availability are transmitted as the suitability parameters of the data evaluating means (18).

10. Method of one of claims 1-9, wherein the suitable data evaluating means (18) is selected by sequentially sampling the respective suitability parameters.

11. Method of one of claims 1-9, wherein the suitable data evaluating means (18) is selected by sampling the respective suitability parameters according to a predetermined priority order.

12. Method of one of claims 1-11, wherein, after execution of the evaluation order, the data evaluating means (18) reports back to the data distributing means (12) and/or the agents (16).

13. Method of claim 11, wherein the agents (16) or the data distributing means (12) cancel the evaluation order after lapse of a predetermined period during which no report has been issued, and transfers the evaluation order to another suitable data evaluating means (18).

14. Method of claim 13, wherein after cancellation a test routine is performed in the data evaluating means.

15. Method of claims 1-14, wherein an evaluation result of an evaluation order is transmitted to a post-processing means, especially to a data bank and/or the data distributing means (12).

16. Method of one of claims 1-15, wherein a plurality of recording means (10) and/or a plurality of data distributing means (12) are connected with a plurality of data evaluating means (18).

17. Method of claim 1, wherein the manager (14) connects the data obtained from the recording means (10) with a data container.

18. Method of one of claims 1-17, wherein a manager (24) is associated to each evaluating means (18), the manager removing the data contained in a data container and passing them to the evaluating means (18) together with the evaluation order.

19. Method of claim 18, wherein the manager (24) connects the data processed by the evaluating means (18) to a data container and passes the same to the manager (14) of the data distributing means (12).

20. Data processing installation for performing the data processing method of one of claims 1-19, comprising
a recording means (10) for generating data, and
a data distributing means (12) for transmitting the data to suitable data evaluating means (18).

21. Data storage medium, especially a CD-ROM, comprising a computer software for executing the method of one of claims 1-19.

## Revendications

1. Procédé de traitement de données, en particulier de données reçues lors d'un processus de screening, comportant les étapes de :
génération de données à l'aide d'un système de réception de données (10),
transmission de données à un système de distribution de données (12) pour distribuer les données à plusieurs systèmes d'analyse de données (18), les données étant traitées sur les systèmes d'analyse de données (18), un agent (16, 22) du côté du système de distribution des données et un agent du côté du système d'analyse des données étant précisément affectés à chaque système d'analyse de données (18), le système de distribution de données (12) présentant un manager (14) pour l'organisation des agents (16) du côté du système de distribution de données, et un manager (24) étant affecté à chaque système d'analyse de données (18),
consultation régulière des paramètres d'aptitude, y compris du paramètre d'aptitude du type de logiciel, par les agents (16) du côté du système de distribution de données auprès des agents (22) du côté du système d'analyse de données,
affectation des données à analyser du système de distribution de données (12) aux agents (16) du côté du système de distribution de données du système d'analyse de données (18) approprié.
transfert des données pour la transmission dans un conteneur de données standardisé qui contient les données et une demande d'analyse affectée,
transmission du conteneur de données standardisé au système d'analyse de données (18) approprié, les données étant échangées exclusivement entre les deux agents (16, 22), et un manager (24) étant prévu pour l'échange des données et de la demande d'analyse entre l'agent (22) du côté du système d'analyse de données et le système d'analyse de données (18).

2. Procédé selon la revendication 1, dans lequel une demande d'analyse est affectée aux données dans le système de réception (10) ou dans le système de distribution de données (12), et dans lequel les données sont transmises au système d'analyse de données (18) dans un conteneur de données standardisé, en même temps que la demande d'analyse.

3. Procédé selon la revendication 1 ou 2, **caractérisé en ce que** des paramètres d'aptitude du système d'analyse de données (18) sont consultés pour l'affectation des données à un système d'analyse (18) approprié.

4. Procédé selon la revendication 3, **caractérisé en ce que** les paramètres d'aptitude sont mémorisés dans un fichier, spécifique au système d'analyse, d'un agent (16).

5. Procédé selon la revendication 4, **caractérisé en ce qu'**à chaque système d'analyse de données (18) est affecté un agent (16) propre.

6. Procédé selon la revendication 4 ou 5, **caractérisé en ce que** les agents (16) font partie du système de distribution de données (12).

7. Procédé selon l'une des revendications 4 à 6, dans lequel les paramètres d'aptitude du système d'analyse de données (18) sont consultés par les agents (16), en particulier au cours d'une phase de démarrage.

8. Procédé selon l'une des revendications 1 à 7, dans lequel les conteneurs de données sont transférés entre le système de distribution de données (12) et les systèmes d'analyse de données (18) par l'intermédiaire d'un système de télétransmission de données (20).

9. Procédé selon l'une des revendications 3 à 8, dans lequel le type de logiciel disponible et/ou la version du logiciel et/ou la disponibilité sont transmis en tant que paramètres d'aptitude du système d'analyse de données (18).

10. Procédé selon l'une des revendications 1 à 9, dans lequel le système d'analyse de données (18) approprié est sélectionné par la consultation successive des paramètres d'aptitude respectifs.

11. Procédé selon l'une des revendications 1 à 9, dans lequel le système d'analyse de données (18) approprié est sélectionné par la consultation des paramètres d'aptitude respectifs sur la base d'un ordre prédéterminé de priorités.

12. Procédé selon l'une des revendications 1 à 11, dans lequel, après l'exécution de la demande d'analyse par le système d'analyse de données (18), un accusé de réception est adressé au système de distribution de données (12) et/ou aux agents (16).

13. Procédé selon la revendication 11, dans lequel, après expiration d'un laps de temps prédéfini durant lequel aucun accusé de réception n'est arrivé, la demande d'analyse est annulée par les agents (16) ou le système de distribution de données (12) et est transmise à un autre système d'analyse de données (18) approprié.

14. Procédé selon la revendication 13, dans lequel, après l'annulation, une routine de test est exécutée dans le système d'analyse de données.

15. Procédé selon l'une des revendications 1 à 14, dans lequel un résultat d'analyse d'une demande d'analyse est transmis à un système de retraitement, en particulier à une banque de données et/ou au système de distribution de données (12).

16. Procédé selon l'une des revendications 1 à 15, dans lequel plusieurs systèmes de réception (10) et/ou plusieurs systèmes de distribution de données (12) sont reliés à plusieurs systèmes d'analyse de données (18).

17. Procédé selon la revendication 1, dans lequel le manager (14) relie les données reçues par le système de réception (10) à un conteneur de données.

18. Procédé selon l'une de revendications 1 à 17, dans lequel à chaque système d'analyse (18) est affecté un manager (24) qui prélève les données contenues dans un conteneur de données et les transmet au système d'analyse (18) en même temps que la demande d'analyse.

19. Procédé selon la revendication 18, dans lequel le manager (24) relie les données traitées par un système d'analyse (18) à un conteneur de données et transmet celles-ci au manager (14) du système de distribution de données (12).

20. Installation de traitement de données pour la mise en oeuvre du procédé de traitement de données selon l'une des revendications 1 à 19, comportant
un système de réception (10) pour générer des données et
un système de distribution de données (12) pour transmettre les données à des systèmes d'analyse de données (18) appropriés.

21. Support de mémoire de données, en particulier CD-ROM, comportant un programme informatique pour la mise en oeuvre du procédé selon l'une des revendications 1 à 19.
